# EUROPEAN PATENT APPLICATION

(11) **EP 4 636 912 A1**
(43) Date of publication of application: **22.10.2025**
(21) Application number: 25167255.6
(22) Date of filing: 31.03.2025
(51) Int. Cl.: H01M 50/105, H01M 50/171, H01M 50/178, H01M 50/184, H01M 50/186, H01M 50/55, H01M 10/0585, H01M 10/0587

(54) **SECONDARY BATTERY**

(30) Priority: 16.04.2024 KR 20240050532
(71) Applicant: Samsung SDI Co., Ltd., Yongin-si, Gyeonggi-do 17084 (KR)
(72) Inventor: KANG, Jung Min, Yongin-si, Gyeonggi-do 17084 (KR); KIM, Ye Som, Yongin-si, Gyeonggi-do 17084 (KR); YEO, Dong Gyu, Yongin-si, Gyeonggi-do 17084 (KR); KIM, Seung Su, Yongin-si, Gyeonggi-do 17084 (KR); KIM, Ji Yun, Yongin-si, Gyeonggi-do 17084 (KR)
(74) Representative: Gulde & Partner

(57) **Abstract**

Disclosed is a secondary battery capable of restraining movement of an electrode assembly located in a pouch. The secondary battery includes an electrode assembly including a positive electrode plate, a negative electrode plate, and a separator disposed between the positive electrode plate and the negative electrode plate, a pouch accommodating the electrode assembly, a lead tab connected to an electrode tab, the electrode tab extending from the electrode assembly and extending outwardly of the pouch, a fixed sealing portion configured to seal an edge of the pouch, and an extended sealing portion located between the fixed sealing portion and the electrode assembly to seal a portion of the pouch at which the electrode tab and the lead tab are not located.

## Description

### FIELD

The present disclosure relates to a secondary battery.

### BACKGROUND

Unlike a primary battery that cannot be charged, a secondary battery is a rechargeable and dischargeable battery. A low-capacity secondary battery may be used for various portable small-sized electronic devices, such as a smartphone, a feature phone, a notebook computer, a digital camera, or a camcorder, and a high-capacity secondary battery is widely used as a power source for motor drives, such as those in hybrid vehicles or electric vehicles. The secondary battery includes an electrode assembly consisting of a positive electrode and a negative electrode, a case accommodating the same, and electrode terminals connected to the electrode assembly.

The above information disclosed in this Background section is only for enhancement of understanding of the background of the invention and therefore it may contain information that does not constitute prior art.

### SUMMARY

The present disclosure provides a secondary battery capable of restraining movement of an electrode assembly located in a pouch.

However, the technical problems to be achieved in the embodiment of the disclosure are not limited to the technical problems mentioned above, and other technical problems not mentioned herein will be clearly understood from the following description by those skilled in the art to which the disclosure belongs.

An exemplary secondary battery according to an embodiment of the present disclosure includes an electrode assembly including a positive electrode plate, a negative electrode plate, and a separator disposed between the positive electrode plate and the negative electrode plate, a pouch configured to accommodate the electrode assembly, a lead tab connected to an electrode tab extending from the electrode assembly, the lead tab extending outwardly of the pouch, a fixed sealing portion configured to seal an edge of the pouch, and an extended sealing portion located between the fixed sealing portion and the electrode assembly to seal a portion of the pouch at which the electrode tab and the lead tab are not located.

In some examples, the secondary battery may further include an insulating tape mounted between the lead tab and the pouch and made of an insulative material.

In some examples, the fixed sealing portion may seal the pouch and the edge of the pouch together with the insulating tape.

In some examples, the extended sealing portion may include a first sealing portion extending from each of both sides of the fixed sealing portion in a width direction and toward the electrode assembly to seal the pouch.

In some examples, the extended sealing portion may include a second sealing portion extending from the center of the fixed sealing portion in a width direction and toward the electrode assembly to seal the pouch.

In some examples, the extended sealing portion may include a first sealing portion extending from each of both sides of the fixed sealing portion in a width direction and toward the electrode assembly to seal the pouch and a second sealing portion extending from the center of the fixed sealing portion in a width direction and toward the electrode assembly to seal the pouch.

In some examples, the positive electrode plate comprises multiple positive electrode plates, the separator comprises multiple separators, and the negative electrode plate of the electrode assembly comprises multiple negative electrode plates, and wherein layers of the positive electrode plate, the separator, and the negative electrode plate may be alternately stacked.

Another exemplary secondary battery according to an embodiment of the present disclosure includes an electrode assembly including a positive electrode plate, a separator, and a negative electrode plate, respective layers of the positive electrode plate, the separator, and the negative electrode plate being alternately stacked, a pouch configured to accommodate the electrode assembly, a lead tab connected to an electrode tab extending from the electrode assembly, the lead tab extending outwardly of the pouch, an insulating tape mounted between the lead tab and the pouch and made of an insulative material, a fixed sealing portion configured to seal an edge of the pouch together with the insulating tape, and an extended sealing portion located between the fixed sealing portion and the electrode assembly to seal a portion of the pouch at which the electrode tab and the lead tab are not located.

In some examples, the lead tab may include a positive electrode lead tab electrically connected to a positive electrode tab extending from the positive electrode plate and a negative electrode lead tab electrically connected to a negative electrode tab extending from the negative electrode plate.

In some examples, the insulating tape may include a first tape located between the positive electrode lead tab and the pouch to block electrical connection between the positive electrode lead tab and the pouch and a second tape located between the negative electrode lead tab and the pouch to block electrical connection between the negative electrode lead tab and the pouch.

In some examples, the fixed sealing portion may seal the pouch and the edge of the pouch together with the insulating tape and may achieve sealing in the width direction of the pouch.

In some examples, the extended sealing portion may include a first sealing portion extending from each of both sides of the fixed sealing portion in a width direction and toward the electrode assembly to seal the pouch.

In some examples, the first sealing portion may not overlap at least one of the electrode assembly or the lead tab.

In some examples, the extended sealing portion may include a second sealing portion extending from the center of the fixed sealing portion in a width direction and toward the electrode assembly to seal the pouch.

In some examples, the second sealing portion may not overlap at least one of the electrode assembly or the lead tab.

In some examples, the extended sealing portion may include a first sealing portion extending from each of both sides of the fixed sealing portion in a width direction and toward the electrode assembly to seal the pouch and a second sealing portion extending from the center of the fixed sealing portion in a width direction and toward the electrode assembly to seal the pouch.

In some examples, the first sealing portion and the second sealing portion may not overlap at least one of the electrode assembly or the lead tab.

### BRIEF DESCRIPTION OF THE DRAWINGS

The following drawings attached to this specification illustrate preferred embodiments of the present disclosure, and serve to further understand the technical idea of the present disclosure together with the detailed description of the present disclosure, and thus, the present disclosure should not be construed as being limited to the matters described in such drawings.
FIG. 1 is an exploded perspective view of an exemplary secondary battery according to the present disclosure;
FIG. 2 is a plan cross-sectional view of the exemplary secondary battery according to the present disclosure;
FIG. 3 is a front cross-sectional view of the exemplary secondary battery according to the present disclosure;
FIG. 4 is a plan cross-sectional view showing an exemplary first sealing portion and an exemplary second sealing portion according to the present disclosure;
FIG. 5 is a plan cross-sectional view showing an exemplary second sealing portion according to the present disclosure;
FIGs. 6A and 6B are perspective views showing a battery pack including the exemplary secondary battery according to the present disclosure;
FIG. 7A is a perspective show showing a vehicle including the exemplary battery pack according to the present disclosure; and
FIG. 7B is a side view showing a vehicle including the exemplary battery pack according to the present disclosure.

### DETAILED DESCRIPTION

Hereinafter, the present disclosure will be described in detail. Prior to giving the following detailed description of the present disclosure, it should be noted that the terms and words used in the specification and the claims should not be construed as being limited to ordinary meanings or dictionary definitions but should be construed in a sense and concept consistent with the technical idea of the present disclosure, on the basis that the inventor can properly define the concept of a term to describe the disclosure in the best way possible. Therefore, the embodiments described in the specification and the configurations described in the drawings are only the most preferred embodiments of the present disclosure, and do not represent all of the technical ideas of the present disclosure. It is to be understood that there may be various equivalents and variations in place of them at the time of filing the present application. In addition, as used herein, the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, when describing embodiments of the present disclosure, "can" and "may" may include "one or more embodiments of the present disclosure."

In addition, for a better understanding of the invention, The attached drawings are not drawn to scale and the dimensions of some components may be exaggerated. In addition, the same reference numbers may be assigned to the same components in different embodiments.

A reference to two objects in comparison being the same means that they are substantially the same. Thus, the wording "substantially the same" may include cases where the same is considered to be a low level in the related art, for example, a deviation within 5%. In addition, when any of parameters is referred to as being uniform in a given region, it may mean that the parameter is uniform from an average perspective.

It will be understood that, although the terms "first," "second," "third," etc., may be used herein to describe various elements, components, regions, layers and/or sections, these elements, components, regions, layers and/or sections should not be limited by these terms. These terms are used to distinguish one element, component, region, layer or section from another element, component, region, layer or section. Thus, unless otherwise defined, a first element, component, region, layer or section described below could be termed a second element, component, region, layer or section, without departing from the scope of the present disclosure.

Throughout the specification, each component may be singular or plural, unless the context clearly indicates otherwise.

The arrangement of an arbitrary component on the "upper portion (or lower portion)" or "upper (or lower) portion" of a component means that an arbitrary component is placed in contact with the upper (or lower) surface of the component. In addition, it may mean that other components may be interposed between the component and any component disposed on (or under) the component.

Also, it will be understood that when an element is referred to as being "connected to," "coupled to," or "linked to" another element, these elements can be directly connected or coupled to each other, another intervening element may be present therebetween, or the respective elements may be connected, coupled, or linked to each other through another elements.

Throughout the specification, the expression "A and/or B" means A, B, or A and B, unless otherwise defined. That is, as used herein, the term "and/or" includes any and all combinations of one or more of the associated listed items. The expression "C to D" means C or more and D or less, unless otherwise defined.

As used herein, the terms are for describing embodiments of the present disclosure and are not intended to limit the disclosure.

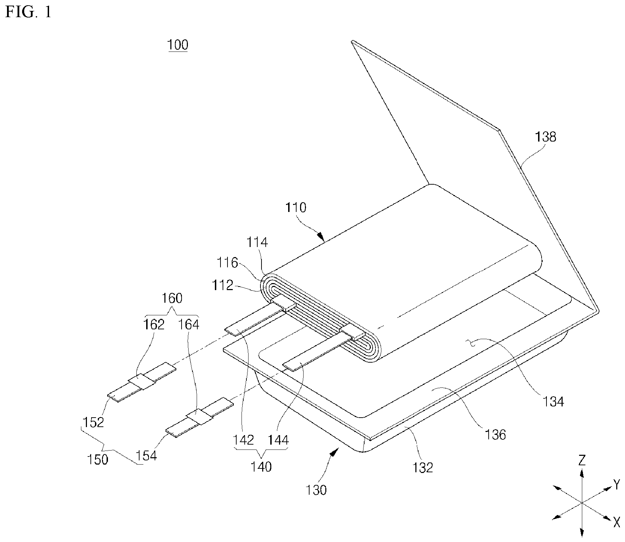

FIG. 1 is an exploded perspective view of an exemplary secondary battery 100 according to the present disclosure. As shown in FIG. 1, the secondary battery 100 according to an embodiment of the present disclosure may include an electrode assembly 110, a pouch 130, an electrode tab 140, a lead tab 150, and an insulating tape 160. The secondary battery 100 further includes a fixed sealing portion 170 and an extended sealing portion 180, which is described herein. In the present disclosure, the secondary battery 100 may be referred to as a battery.

The electrode assembly 110 may be variously modified in shape, so long as the electrode assembly 110 includes a positive electrode plate 112, a negative electrode plate 114, and a separator 116 disposed between the positive electrode plate 112 and the negative electrode plate 114. The electrode assembly 110 may be formed in a stack shape in which the negative electrode plate 114, the positive electrode plate 112, and the separator 116 are alternately stacked, or may be formed in a roll shape in which the negative electrode plate 114, the positive electrode plate 112, and the separator 116 are wound. The electrode assembly 110 according to the embodiment of the present disclosure may be accommodated in the pouch 130, may include the positive electrode plate 112, the negative electrode plate 114, and the separator 116 disposed between the positive electrode plate 112 and the negative electrode plate 114, and may be provided with an electrode tab 140 extending therefrom in one direction.

The positive electrode plate 112 may be formed in the shape of a plate made of aluminum (Al), and at least one surface of the positive electrode plate 112 may be coated with a positive electrode active material such as a transition metal oxide. In some examples, the positive electrode plate 112 may be provided on one side thereof with a positive electrode uncoated portion not coated with the positive electrode active material.

The negative electrode plate 114 may be formed in the shape of a plate made of copper (Cu) or nickel (Ni), and at least one surface of the negative electrode plate 114 may be coated with a negative electrode active material such as graphite or carbon. In some examples, the negative electrode plate 114 may be provided on one side thereof with a negative electrode uncoated portion not coated with the negative electrode active material.

The separator 116 may be made of polyethylene (PE) or polypropylene (PP). However, the disclosure is not limited thereto. The separator 116 may prevent electrical short circuit between the positive electrode plate 112 and the negative electrode plate 114 while allowing lithium ions to move therebetween.

As the positive electrode active material, a compound capable of reversibly intercalating /deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c}(0.90≤a≤1.8, 0≤b≤0.5, 0≤c≤0.05); LiₐMn_{2-b}X_{b}O_{4-c}Dₑ(0.90≤a≤1.8, 0≤b≤0.5, 0≤c≤0.05); LiₐNi_{1-b-c}Co_{b}X_{c}O_{2-α}D_{α}(0.90≤a≤1.8, 0≤b≤0.5, 0≤c≤0.5, 0<α<2); LiₐNi_{1-b-c}Mn_{d}X_{c}O_{2-α}D_{α}(0.90≤a≤1.8, 0≤b≤0.5, 0≤c≤0.5, 0<α<2); LiₐNi_{b}Co_{c}L¹_{d}GₑO₂(0.90≤a≤1.8, 0≤b≤0.9, 0≤c≤0.5, 0≤d≤0.5, 0≤e≤0.1); LiₐNiG_{b}O₂(0.90≤a≤1.8, 0.001≤b≤0.1); LiₐCoGpO₂(0.90≤a≤1.8, 0.001≤b≤0.1); LiₐMn_{1-b}G_{b}O₂(0.90≤a≤1.8, 0.001≤b≤0.1); LiₐMn₂G_{b}O₄(0.90≤a≤1.8, 0.001≤b≤0.1); LiₐMn_{1-g}G_{g}PO₄(0.90≤a≤1.8, 0≤g≤0.5); Li_{(3-f)}Fe₂(PO₄)₃(0≤f≤2); LiₐFePO₄(0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a current collector and a positive electrode active material layer formed on the current collector. The positive electrode active material layer may include a positive electrode active material and may further include a binder and/or a conductive material.

The content of the positive electrode active material is in a range of about 90 wt% to about 99.5 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The current collector may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOx (0 < x < 2), a Si-based alloy, or a combination thereof.

The silicon-carbon composite may be a composite of silicon and amorphous carbon. According to one embodiment, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a current collector and a negative electrode active material layer disposed on the current collector. The negative electrode active material layer may include a negative electrode active material and may further include a binder and/or a conductive material.

For example, the negative electrode active material layer may include about 90 wt % to about 99 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode current collector, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film of two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer containing an organic material and a coating layer containing an inorganic material that are laminated on each other.

The electrode tab 140 may include a positive electrode tab 142 and a negative electrode tab 144. The positive electrode tab 142 may be electrically connected to the positive electrode uncoated portion of the positive electrode plate 112. The negative electrode tab 144 may be electrically connected to the negative electrode uncoated portion of the negative electrode plate 114. The electrode tab 140 may be a substrate tab formed by punching the uncoated portion. The positive electrode tab 142 may be a substrate tab formed by punching the positive electrode uncoated portion. The negative electrode tab 144 may be a substrate tab formed by punching the negative electrode uncoated portion. If the electrode assembly 110 is formed in a stack shape, a plurality of positive electrode uncoated portions and a plurality of negative electrode uncoated portions may be provided on one side of the electrode assembly 110. Thus, each of the positive electrode tab 142 and the negative electrode tab 144 may also be provided in plural (e.g., the electrode assembly 110 may comprise a plurality of negative electrode tabs 144 and a plurality of positive electrode tabs 142). One side of the positive electrode tab 142 may be connected to the positive electrode uncoated portion, and the other side of the positive electrode tab 142 may be connected to a positive electrode lead tab 152. One side of the negative electrode tab 144 may be connected to the negative electrode uncoated portion, and the other side of the negative electrode tab 144 may be connected to a negative electrode lead tab 154.

The lead tab 150 may be variously modified in shape, so long as the lead tab 150 is connected to the electrode tab 140 extending from the electrode assembly 110 and extends outwardly of the pouch 130. In some examples, the lead tab 150 may include a positive electrode lead tab 152 electrically connected to the positive electrode tab 142 extending from the positive electrode plate 112 and a negative electrode lead tab 154 electrically connected to the negative electrode tab 144 extending from the negative electrode plate 114.

The positive electrode lead tab 152 may be electrically connected to the positive electrode tab 142. The negative electrode lead tab 154 may be electrically connected to the negative electrode tab 144. The negative electrode lead tab 154 and the positive electrode lead tab 152 may be welded to a negative electrode lead and a positive electrode lead of an external terminal to be electrically connected to the outside.

The insulating tape 160 may be mounted between the lead tab 150 and the pouch 130 and is made of an insulative material. The insulating tape 160 according to an embodiment of the present disclosure may include a first tape 162, which is located between the positive electrode lead tab 152 and the pouch 130 and which blocks electrical connection between the positive electrode lead tab 152 and the pouch 130, and a second tape 164, which is located between the negative electrode lead tab 154 and the pouch 130 and which blocks electrical connection between the negative electrode lead tab 154 and the pouch 130. The first tape 162 may be attached to each of the upper side and the lower side of the positive electrode lead tab 152. The second tape 164 may be attached to each of the upper side and the lower side of the negative electrode lead tab 154.

The electrode assembly 110 may be accommodated in the pouch 130 together with an electrolyte. In some examples, the electrolyte may include a lithium salt, such as LiPF6 or LiBF4, dissolved in an organic solvent, such as ethylene carbonate (EC), propylene carbonate (PC), diethyl carbonate (DEC), ethyl methyl carbonate (EMC), or dimethyl carbonate (DMC).

The pouch 130 may be variously modified in shape, so long as the electrode assembly 110 is accommodated in the pouch 130. The pouch 130 may be mounted in a shape surrounding the electrode assembly 110. The pouch 130 may be implemented as a soft film. A rectangular film elongated in a longitudinal direction Y may be folded to form a case main body 132 and a case cover 138 of the pouch 130.

The pouch 130 according to an embodiment of the present disclosure may include a case main body 132 and a case cover 138, and the case cover 138 may be rotatably mounted to the case main body 132. After the electrode assembly 110 is accommodated in a recess 134 formed in the case main body 132, the case cover 138 may be rotated to be coupled and sealed to the case main body 132.

In another example, the case main body 132 and the case cover 138 may be provided as separate members. In another example, the case main body 132 and the case cover 138 may be integrally formed with each other, and only the front side of the pouch 130 may be open to allow the lead tab 150 to be mounted therein. The pouch 130 may be formed in various other configurations. In the present disclosure, the pouch 130 is not limited to an integrated type in which the case main body 132 and the case cover 138 are integrally formed using a single film. However, for convenience of description, the pouch 130 will be described with reference to an example in which the case main body 132 and the case cover 138 are formed using a single rectangular film. In the present disclosure, a width direction is defined as an X-axis direction, a longitudinal direction is defined as a Y-axis direction, and a vertical direction is defined as a Z-axis direction.

The case main body 132 may include a recess 134 and a main body periphery 136. The recess 134 may be formed at substantially the center of the case main body 132 to accommodate the electrode assembly 110, and the main body periphery 136 may extend substantially outwardly from three sides of the recess 134. In another example, the main body periphery 136 may extend outwardly from four sides of the recess 134. The main body periphery 136 may form a planar surface at a position facing the case cover 138. The main body periphery 136 may be a surface that is parallel to and coupled to the case cover 138. For example, if the case main body 132 and the case cover 138 are provided as separate members, the case main body 132 may include four main body peripheries 136.

Each of the case cover 138 and the case main body 132 may be implemented as a multilayer thin film, which includes a metal thin film and insulating layers respectively formed on opposing surfaces of the metal thin film. Surfaces of the case cover 138 and the case main body 132 that are in contact with each other are defined as inner surfaces, and surfaces thereof opposite the inner surfaces are defined as outer surfaces.

The recess 134 in the case main body 132 may be formed to have a size capable of accommodating the electrode assembly 110 through a press process, a drawing process, or the like. After the portion of the case main body 132 in which the recess 134 is formed is covered by the case cover 138, the main body periphery 136 and the edge of the case cover 138 may be thermally fused to each other. After the electrode assembly 110 is accommodated in the recess 134, the pouch 130 may be sealed by performing sealing between the edge area of the case main body 132 and the edge area of the case cover 138. A thermally fusible layer made of a thermally fusible material may be formed on the inner surface of the pouch 130.

The case cover 138 may have a rectangular planar plate shape. The case cover 138 may be rotated to cover the upper side of the case main body 132.

In the case of a stack-type electrode assembly 110 in which the positive electrode plate 112, the negative electrode plate 114, and the separator 116 are formed in a plate shape and stacked, a welded portion between the electrode tab 140 and the lead tab 150 may be bent in a "V" shape in order to minimize the length of a terrace. However, in the case of a stack-type electrode assembly 110 having a small thickness, i.e., a thin-film type electrode assembly 110, the welded portion between the electrode tab 140 and the lead tab 150 is bent in an "L" shape rather than a "V" shape. If the thickness of the secondary battery 100 is 3 cm or less, a space in which the welded portion is bent may be insufficient, and thus if the welded portion is bent in an "L" shape, there is a possibility of the electrode assembly 110 being moved due to fall of the secondary battery 100. If the welded portion and the sealed portion of the pouch 130 overlap each other, the pouch 130 may not be sealed, and thus if the welded portion is bent in an "L" shape, the length of the terrace may increase. If the length of the terrace increases, an empty space in which sealing is not achieved may be formed, and if falling impact is applied to the secondary battery 100, the electrode assembly 110 may be moved to the unsealed empty space, and thus the possibility of short circuit occurring due to physical impact may increase.

If sealing is performed on the terrace on which the lead tab 150 is located in order to restrain movement of the electrode assembly 110, other types of sealing rather than linear sealing may be performed to prevent movement of the electrode assembly 110.

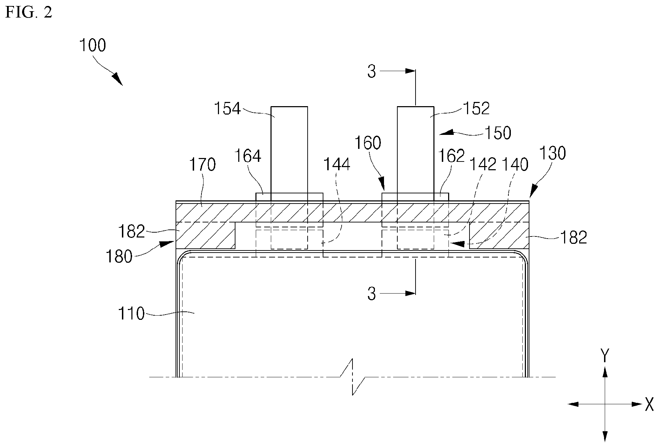

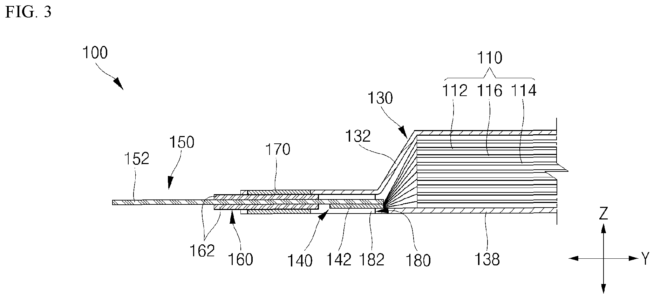

FIG. 2 is a plan cross-sectional view of the exemplary secondary battery 100 according to the present disclosure, and FIG. 3 is a front cross-sectional view of the exemplary secondary battery 100 according to the present disclosure. As shown in FIGs. 2 and 3, the fixed sealing portion 170 may be variously modified, so long as the fixed sealing portion 170 seals the edge of the pouch 130. In some examples, the fixed sealing portion 170 may seal the pouch 130 and the edge of the pouch 130 together with the insulating tape 160. The fixed sealing portion 170 may seal an open end portion of the pouch 130 through which the lead tab 150 is led out. The fixed sealing portion 170 may seal the edge of the pouch 130 together with the insulating tape 160. The fixed sealing portion 170 may achieve sealing in the width direction X of the pouch 130. The fixed sealing portion 170 may seal an open entrance of the pouch 130 in a strip shape, and may be mounted so as to overlap the insulating tape 160. Because the fixed sealing portion 170 does not contact either the lead tab 150 or the electrode tab 140, the pouch 130 may be sealed. Sealing of the pouch 130 may be performed on both sides of the pouch 130 in the width direction X (hereinafter based on FIG. 2) and on the upper side of the pouch 130 through which the lead tab 150 is led out. In such an embodiment, a portion of sealing the upper side of the pouch 130 through which the lead tab 150 is led out may be referred to as the fixed sealing portion 170. In another embodiment, in a state in which only the upper side of the pouch 130 is open, a portion of sealing the upper side of the pouch 130 through which the lead tab 150 is led out after the electrode assembly 110 is mounted in the pouch 130 may be referred to as the fixed sealing portion 170. The fixed sealing portion 170 may be a strip-shaped seal portion that seals the open entrance in the upper side of the pouch 130. The length of the fixed sealing portion 170 in the longitudinal direction Y may be less than the length of the insulating tape 160 in the longitudinal direction Y. Thus, if the fixed sealing portion 170 is mounted so as to overlap the insulating tape 160, it may be possible to prevent the fixed sealing portion 170 from being electrically connected to the electrode tab 140 or the lead tab 150 due to contact therewith. The fixed sealing portion 170 may be formed through thermal fusion and may be located in the terrace area.

The extended sealing portion 180 may be variously modified, so long as the extended sealing portion 180 is located between the fixing sealing portion 170 and the electrode assembly 110 and seals a portion of the pouch 130 at which the electrode tab 140 and the lead tab 150 are not located. The extended sealing portion 180 and the fixed sealing portion 170 may be integrally formed with each other. In some examples, the extended sealing portion 180 may include a first sealing portion 182 extending, from each of both sides of the fixed sealing portion 170 in the width direction X (leftward-rightward direction in FIG. 2), toward the electrode assembly 110 to seal the pouch 130. In other words, the first sealing portion 182 may extend downwardly, i.e. toward the electrode assembly 110, from both opposite sides of the fixed sealing portion 170 to seal the pouch 130.The first sealing portion 182 may not overlap either the electrode assembly 110 or the lead tab 150. Because the sealing areas between the welded portions to which the electrode tab 140 and the lead tab 150 are welded and the pouch 130 do not overlap each other, insulation of the pouch 130 may be ensured. Because the movement space between the fixed sealing portion 170 and the electrode assembly 110 is reduced due to additional mounting of the extended sealing portion 180, the movement distance of the electrode assembly 110 may be reduced, and damage to the electrode assembly 110 due to falling impact may be reduced.

The first sealing portion 182 may extend downwardly, from each of both sides of the fixed sealing portion 170 in the width direction X, toward the electrode assembly 110. The fixed sealing portion 170 and the first sealing portion 182 may seal the pouch 130 in a "U" shape.

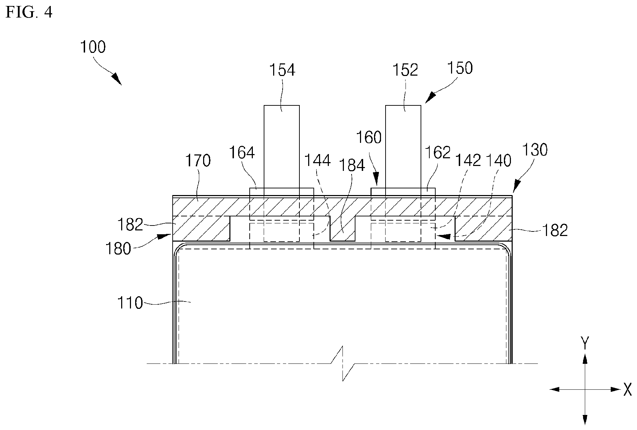

FIG. 4 is a plan cross-sectional view showing an exemplary first sealing portion 182 and an exemplary second sealing portion 184 according to the present disclosure. As shown in FIG. 4, the extended sealing portion 180 may include a first sealing portion 182 and a second sealing portion 184. The first sealing portion 182 may extend, from each of both sides of the fixed sealing portion 170 in the width direction X, toward the electrode assembly 110 to seal the pouch 130. The second sealing portion 184 may extend, from the center of the fixed sealing portion 170 in the width direction X, toward the electrode assembly 110 to seal the pouch 130. In other words, the second sealing portion 184 may extend downwardly, i.e. toward the electrode assembly 110, from the center of the fixed sealing portion 170 to seal the pouch 130. In some examples, the first seal portion 182 and the second sealing portion 184 may not overlap either the electrode assembly 110 or the lead tab 150.

Two first sealing portions 182 and one second sealing portion 184 may be provided. The negative electrode lead tab 154 and the second tape 164 may be located between the first sealing portion 182 located on one side in the width direction X and the second sealing portion 184. The positive electrode lead tab 152 and the first tape 162 may be located between the first sealing portion 182 located at the other side in the width direction X and the second sealing portion 184. The fixed sealing portion 170, the first sealing portion 182, and the second sealing portion 184 may seal the pouch 130 in an "E" shape. Sealing of the pouch 130 by the fixed sealing portion 170 and the extended sealing portion 180 may be achieved through various methods (e.g., by thermal fusion). The fixed sealing portion 170 and the extended sealing portion 180 may fix/bond the case main body 132 and the case cover 138 to each other through a method such as thermal fusion.

The first sealing portion 182 and the second sealing portion 184 may be formed in various shapes, e.g., a rectangular protrusion shape, a curved protrusion shape, or a triangular protrusion shape. Further, the first sealing portion 182 and the second sealing portion 184 may be variously modified in shape. For example, the first sealing portion 182 and/or the second sealing portion 184 may be formed in an irregular shape.

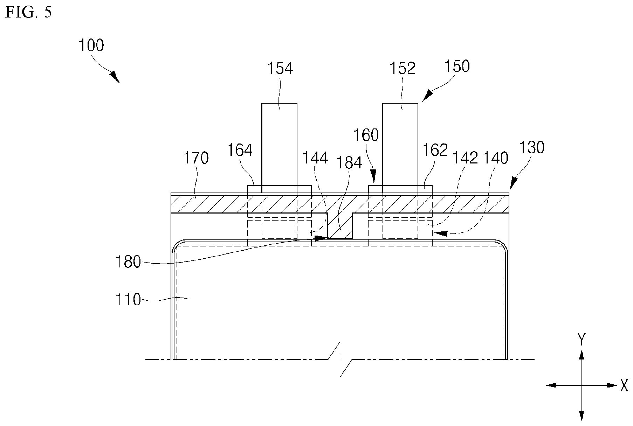

FIG. 5 is a plan cross-sectional view showing an exemplary second sealing portion 184 according to the present disclosure. As shown in FIG. 5, the extended sealing portion 180 may include a second sealing portion 184 extending, from the center of the fixed sealing portion 170 in the width direction X, toward the electrode assembly 110 to seal the pouch 130. In other words, the second sealing portion 184 may extend downwardly, i.e. toward the electrode assembly 110, from the center of the fixed sealing portion 170 to seal the pouch 130. The second sealing portion 184 may not overlap either the electrode assembly 110 or the lead tab 150. The second sealing portion 184 may be located between the first tape 162 and the second tape 164. Further, the second sealing portion 184 may be located between the positive electrode tab 142 and the negative electrode tab 144.

The battery according to the above-described embodiment may be used to manufacture a battery pack.

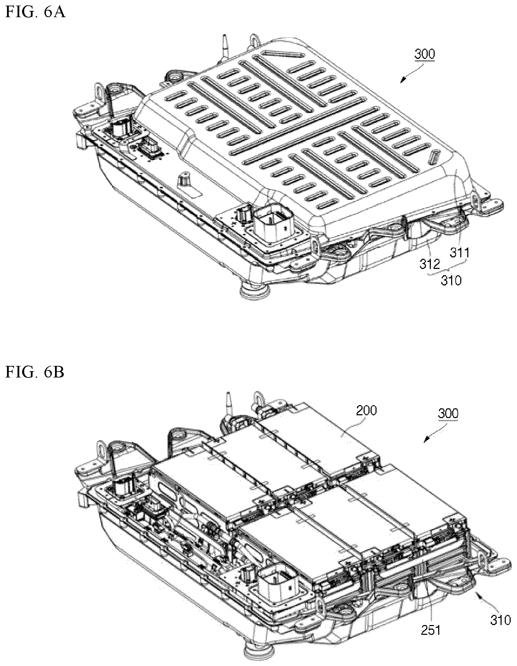

FIGs. 6A and 6B are perspective views showing a battery pack including the exemplary secondary battery 1 according to the present disclosure.

Referring to FIGs. 6A and 6B, the battery pack 300 may include a plurality of battery modules 200 and a housing 310 to accommodate the plurality of battery modules 200. For example, the housing 310 may comprise a first and a second housing 311, 312 that are coupled in facing directions with the plurality of battery modules 200 interposed between them. The plurality of battery modules 210 can be electrically connected to each other using a bus bar 251, and the plurality of battery modules 200 can be electrically connected in series/parallel or a mixed series-parallel manner to obtain the required electrical output. In the drawings, for the sake of convenience, components such as bus bars, cooling units, and external terminals for the electrical connection of battery cells are omitted. In some embodiments, the battery pack 300 can be mounted on a vehicle. The vehicle may be, for example, an electric vehicle, a hybrid vehicle, or a plug-in hybrid vehicle. The vehicle can include both four-wheel and two-wheel vehicles.

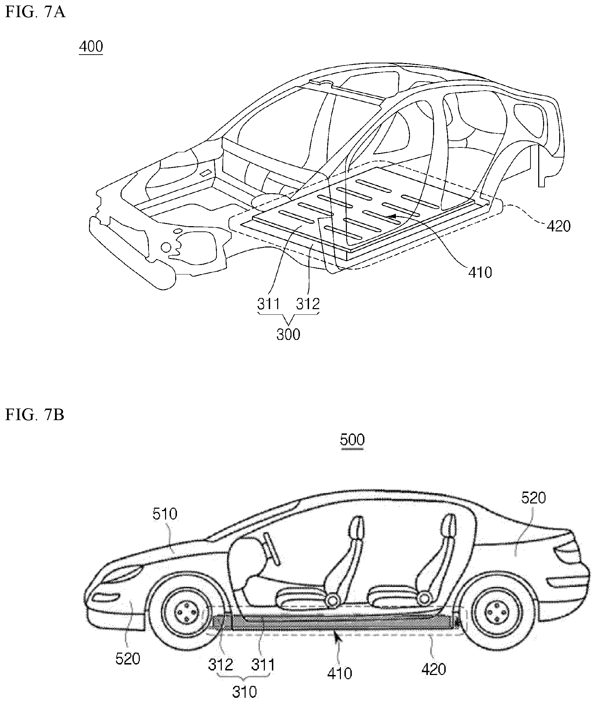

FIGs. 7A and 7B are, respectively, a perspective view and a side view showing a vehicle including the exemplary battery pack according to the present disclosure.

In FIG. 7A, the battery pack 300 may include a battery pack cover 311, which is part of the vehicle underbody 410 and may correspond to the first housing, and a pack frame 312, which is placed beneath the vehicle underbody 410 and may correspond to the second housing. The battery pack cover 311 and pack frame 312 may be structurally integrated with the vehicle floor 420. The vehicle underbody 410 separates the interior and exterior of the vehicle, and the pack frame 312 may be positioned outside the vehicle.

As shown in FIG. 7B, the vehicle 500 can be assembled with additional components such as a hood 510 at the front of the vehicle body 400 and fenders 520 located at the front and rear of the vehicle. The vehicle 500 includes the battery pack 300 comprising the battery pack cover 311 and the pack frame 312, and the battery pack 300 can be coupled to the vehicle body part 400.

As is apparent from the above description, according to the present disclosure, because movement of an electrode assembly mounted in a pouch is restrained by an extended sealing portion, damage to the electrode assembly due to falling impact of a secondary battery may be reduced.

However, the technical effects to be achieved in the embodiment of the disclosure are not limited to the technical problems mentioned above, and those skilled in the art to which the disclosure belongs will clearly understand other technical effects not mentioned herein from the above description.

Although a few embodiments of the present disclosure have been shown and described, it would be appreciated by those skilled in the art that various changes and modifications may be made in this embodiment without departing from the principles of the disclosure, the scope of which is defined in the appended claims.

## Claims

1. A secondary battery (100) comprising:
an electrode assembly (110) comprising a positive electrode plate (112), a negative electrode plate (114), and a separator (116) disposed between the positive electrode plate (112) and the negative electrode plate (114);
a pouch (130) configured to accommodate the electrode assembly (110);
a lead tab (150) connected to an electrode tab (140) extending from the electrode assembly (110), the lead tab (150) extending outwardly of the pouch (130);
a fixed sealing portion (170) configured to seal an edge of the pouch (130); and
an extended sealing portion (180) located between the fixed sealing portion (170) and the electrode assembly (110) to seal a portion of the pouch (130) at which the electrode tab (140) and the lead tab (150) are not located.

2. The secondary battery (100) as claimed in claim 1, further comprising an insulating tape (160) mounted between the lead tab (150) and the pouch (130) and made of an insulative material.

3. The secondary battery (100) as claimed in claim 2, wherein the fixed sealing portion (170) seals the pouch (130) and the edge of the pouch (130) together with the insulating tape (160).

4. The secondary battery (100) as claimed in any one of the preceding claims 1 to 3, wherein the fixed sealing portion (170) and the extended sealing portion (180) are integrally formed.

5. The secondary battery (100) as claimed in any one of the preceding claims 1 to 4, wherein the extended sealing portion (180) comprises a first sealing portion (182) extending, from each of both sides of the fixed sealing portion (170) in a width direction, toward the electrode assembly (110) to seal the pouch (130).

6. The secondary battery (100) as claimed in claim 5, wherein the first sealing portion (170) does not overlap at least one of the electrode assembly (110) or the lead tab (150).

7. The secondary battery (100) as claimed in any one of the preceding claims 1 to 4, wherein the extended sealing portion (180) comprises a second sealing portion (184) extending, from a center of the fixed sealing portion (170) in a width direction, toward the electrode assembly (110) to seal the pouch (130).

8. The secondary battery (100) as claimed in claim 7, wherein the second sealing portion (184) does not overlap at least one of the electrode assembly (110) or the lead tab (150).

9. The secondary battery (100) as claimed in any one of the preceding claims 1 to 8, wherein the extended sealing portion (180) comprises:
a first sealing portion (182) extending, from each of both sides of the fixed sealing portion (170) in a width direction, toward the electrode assembly (110) to seal the pouch (130); and
a second sealing portion (184) extending, from a center of the fixed sealing portion (170) in a width direction, toward the electrode assembly (110) to seal the pouch (130).

10. The secondary battery (100) as claimed in claim 9, wherein the first sealing portion (170) and the second sealing portion (184) do not overlap at least one of the electrode assembly (110) or the lead tab (150).

11. The secondary battery (100) as claimed in any of the preceding claims 1 to 10, wherein the positive electrode plate (112) comprises multiple positive electrode plates (112), the separator (116) comprises multiple separators (116), and the negative electrode plate (114) of the electrode assembly (110) comprises multiple negative electrode plates (114), and wherein layers of the positive electrode plate (112), the separator (116), and the negative electrode plate (114) are alternately stacked.

12. The secondary battery as claimed in any of the preceding claims 1 to 10, wherein the negative electrode plate (114), the positive electrode plate (112) and the separator (116) are wound.

13. The secondary battery (100) as claimed in any of the preceding claims 1 to 12, wherein the lead tab (150) comprises:
a positive electrode lead tab (152) electrically connected to a positive electrode tab (142) extending from the positive electrode plate (112); and
a negative electrode lead tab (154) electrically connected to a negative electrode tab (144) extending from the negative electrode plate (114).

14. The secondary battery (100) as claimed in claim 13, when dependent on one of the claims 7 to 10, wherein the second sealing portion (184) is located between the positive electrode tab (142) and the negative electrode tab (144).

15. The secondary battery (100) as claimed in any of the claims 13 to 14, when dependent on claim 2, wherein the insulating tape (160) comprises:
a first tape (162) located between the positive electrode lead tab (152) and the pouch (130) to block electrical connection between the positive electrode lead tab (152) and the pouch (130); and
a second tape (164) located between the negative electrode lead tab (154) and the pouch (130) to block electrical connection between the negative electrode lead tab (154) and the pouch (130).
